(19) Europäisches Patentamt European Patent Office Office européen des brevets

(11) **EP 1 997 254 B1**

(12) **FASCICULE DE BREVET EUROPEEN**

(45) Date de publication et mention de la délivrance du brevet:
**28.11.2018 Bulletin 2018/48**

(21) Numéro de dépôt: **07726864.7**

(22) Date de dépôt: **13.03.2007**

(51) Int Cl.:
*H04L 1/00* *(2006.01)* *H04L 7/00* *(2006.01)*

(86) Numéro de dépôt international:
**PCT/EP2007/052363**

(87) Numéro de publication internationale:
**WO 2007/107482 (27.09.2007 Gazette 2007/39)**

(54) **PROCEDE DE PROTECTION DE DONNEES MULTIMEDIA AU MOYEN DE COUCHES D'ABSTRACTION RESEAU (NAL) SUPPLEMENTAIRES**

VERFAHREN ZUM SCHÜTZEN VON MULTIMEDIENDATEN UNTER VERWENDUNG VON ZUSÄTZLICHEN NAL (NETWORK ABSTRACTION LAYERS)

METHOD FOR PROTECTING MULTIMEDIA DATA USING ADDITIONAL NETWORK ABSTRACTION LAYERS (NAL)

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.03.2006 FR 0602380**

(43) Date de publication de la demande:
**03.12.2008 Bulletin 2008/49**

(73) Titulaire: **Thales**
**92400 Courbevoie (FR)**

(72) Inventeurs:
• **LAMY-BERGOT, Catherine**
**F-75019 Paris (FR)**
• **BERGERON, Cyril**
**F-75020 Paris (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 592 160** **WO-A-95/14971**
**WO-A-2005/107123** **US-A1- 2002 027 911**
**US-B1- 6 819 658**

**EP 1 997 254 B1**

## Description

L'invention concerne notamment un procédé permettant de protéger des données multimédia au moyen de l'insertion dans le flux de couches d'abstraction réseau supplémentaires.

Plus particulièrement, l'invention peut s'appliquer dans des applications mettant en oeuvre la norme définie en commun par l'ISO MPEG et le groupe Vidéo Coding (VCEG) de l'ITU-T dite H.264 ou MPEG-4 AVC (Advanced Video Coding) qui est une norme vidéo fournissant une compression plus efficace que les normes vidéo précédentes (e.g. H.263, MPEG-2) tout en présentant une complexité de mise en oeuvre raisonnable et facilement adaptable par les applications en réseau.

Etablie en mai 2003, la version finale du document ITU-T de référence (JVT-G050r1) spécifie uniquement les aspects du codage vidéo de l'outil le plus efficace connu à ce jour. Les principales applications ciblées par H.264 sont :

- les services vocaux duplex temps réel (visiophonie) sur le câble ou sans fil (UMTS ...) avec débit inférieur à 1 Mb/s,

- les services vidéo courants ou de qualité haute via satellite, xDSL, ou DVD avec débit de 1 à 8 Mb/s,

- la basse qualité vidéo avec débit plus bas tel Internet (< 2 Mb/s).

Des extensions de la norme sont actuellement en cours d'étude, en particulier pour la télévision haute définition (profil High) et pour insérer des fonctions de scalabilité ou échelonnage (groupe SVC ou Scalable Video Coding).

Le type d'erreurs rencontré lors de la transmission et du décodage peut correspondre à des erreurs introduites par un canal de transmission, comme la famille des canaux sans fils, des canaux classiques civils (e.g. transmissions sur UMTS, WiFi, WiMax) aux canaux militaires (e.g. HF). Ces erreurs peuvent être de type « perte paquet » (perte d'une suite de bits ou d'octets), « erreur bits » (possible inversion d'un ou plusieurs bits ou octets, aléatoirement ou en rafales), « effacements » (perte de taille et ou position connue(s) d'un, de plusieurs ou d'une suite de bits ou octets) ou encore résulter d'un mélange de ces différents incidents.

La sensibilité aux erreurs des codes à longueur variable est bien connue et son comportement catastrophique fameux, en particulier dans un standard tel que H.264/AVC, où les marqueurs de synchronisation sont présents uniquement au début des NALs. Or les canaux de transmission induisent des bruits et des évanouissements ou « fading » dans les flux transmis, conduisant notamment à des erreurs.

Un bon moyen pour prévenir une propagation d'erreurs trop importante est d'être capable de les détecter et, si possible, de les corriger, et non pas simplement de les masquer, lorsqu'elles se produisent.

Les méthodes mises en oeuvre par l'art antérieur pour pallier les problèmes résultant de la présence d'erreurs reposent principalement sur :

- la transmission de redondance supplémentaire par un second canal ou second flux, que ce soit au niveau source (codage par descriptions multiples, codage distribué, emploi de « redundant slices »), au niveau réseau (répétition de type ARQ, ajout de redondance FEC) ou au niveau accès radio (FEC),

- l'ajout direct de redondance dans le flux initial, sans tenir compte du problème de compatibilité (plus rare, plutôt présent dans les travaux académiques ou théoriques).

Il est ainsi possible d'ajouter des tranches « slices » redondantes obtenues par codage à descriptions multiples ou « redundant slices », qui reposent sur un codage de compression avec des points de référence ou des coefficients de compression différents, et pas sur le principe du codage correcteur d'erreur.

Ainsi, en cas d'erreur, l'emploi de la slice redondante permettra en effet de décoder (plus ou moins efficacement) l'image corrompue en décodant sa réplique. Ceci ne permettra pas, en revanche, de corriger les erreurs qui auront pu apparaître, qu'il s'agisse d'erreurs paquets ou bits.

La demande de brevet WO 2005/107123 décrit un procédé pour transmettre un flux de paquets numérisés dans lequel les paquets de correction d'erreurs sont insérés dans le flux à des positions choisies.

La demande de brevet WO 95/14971 décrit une méthode et un système pour synchroniser les codeurs et les décodeurs dans un réseau de communication lorsque des erreurs sont détectées.

La demande de brevet EP 1592160 concerne une structure de trame particulière pour les systèmes de transmission audio numérique.

Le brevet US 6819658 enseigne de positionner la valeur du code de Reed-Solomon de l'émetteur et du récepteur à une valeur maximale pendant la période de temps où le système n'a pas réalisé la synchronisation.

L'invention concerne un procédé de protection de données dans un système de transmission où les données multimédia sont codées avec un standard de type H.264, les données étant encapsulées dans une structure d'une couche d'abstraction réseau de type NAL caractérisé en ce qu'il comporte au moins les étapes suivantes :

ajouter à une structure d'informations au moins une couche supplémentaire d'abstraction de réseau supplémentaire (NAL) contenant des informations d'identification de la structure en tant que NAL de redondance, identifier des structures de données initiales auxquelles la redondance se rapporte, et le correcteur d'erreur utilisé pour transmettre les données, le contenu et la position de la NAL dans le flux étant connus d'un décodeur du système de transmission, les NALs supplémentaires comportant l'information du codeur utilisé et transportant comme charge utile la redondance générée du côté émetteur du système de transmission.

La nouvelle structure d'encapsulation transporte, par exemple, les informations de synchronisation.

La structure d'encapsulation est par exemple configurée pour transporter des informations de correction d'erreur, et le procédé comporte une étape où l'on ajoute au moins une structure d'encapsulation contenant de la redondance et les informations nécessaires pour :

- l'identification de la structure d'encapsulation en tant que structure de redondance,

- l'identification de la structure d'encapsulation à laquelle la redondance se rapporte,

- le code correcteur d'erreur utilisé pour transmettre les données.

L'ajout de la NAL de redondance peut être effectué lors de l'opération de codage de compression initiale.

L'ajout de la NAL de redondance est, par exemple, effectué lors du passage dans un transcodeur des données à transmettre.

Une NAL de redondance peut être disposée avant une NAL d'information (de données vidéo) et en ce que l'en-tête de la NAL de redondance comprend un champ indiquant le code correcteur d'erreur utilisé.

On inclut, par exemple, dans l'en-tête de la NAL de redondance un champ indiquant le numéro de NAL de vidéo à laquelle la redondance s'applique.

On peut ajouter dans l'en-tête de la NAL de redondance un champ indiquant les différents numéros de NAL auxquels s'applique la NAL de redondance.

On utilise, par exemple, le code Reed Solomon comme code correcteur d'erreur.

L'invention concerne aussi un dispositif de protection de données dans un système de transmission où la structure de l'information transmise se présente sous la forme d'une structure d'encapsulation de données utilisées, structure qui peut servir de base pour créer de nouvelles structures transportant des informations de synchronisation, caractérisé en ce qu'il comporte au moins un codeur comprenant un processeur adapté à exécuter les étapes du procédé énoncées ci-dessus.

L'invention présente notamment les avantages suivants :

- elle permet une protection au niveau applicatif, donc au plus proche de l'équipement de codage vidéo, en restant compatible du standard vidéo employé et du reste de la chaîne de transmission, puisque l'on ne dépend plus des couches basses,

- elle assure une compatibilité avec le standard vidéo considéré (H.264 AVC),

- elle offre une facilité de mise en place et de transparence par rapport aux solutions existantes,

- elle permet un gain de protection contre les erreurs.

D'autres caractéristiques et avantages de l'invention apparaîtront mieux, à la lecture de la description d'un exemple de réalisation, donné à titre illustratif et nullement limitatif, annexée des figures qui représentent :

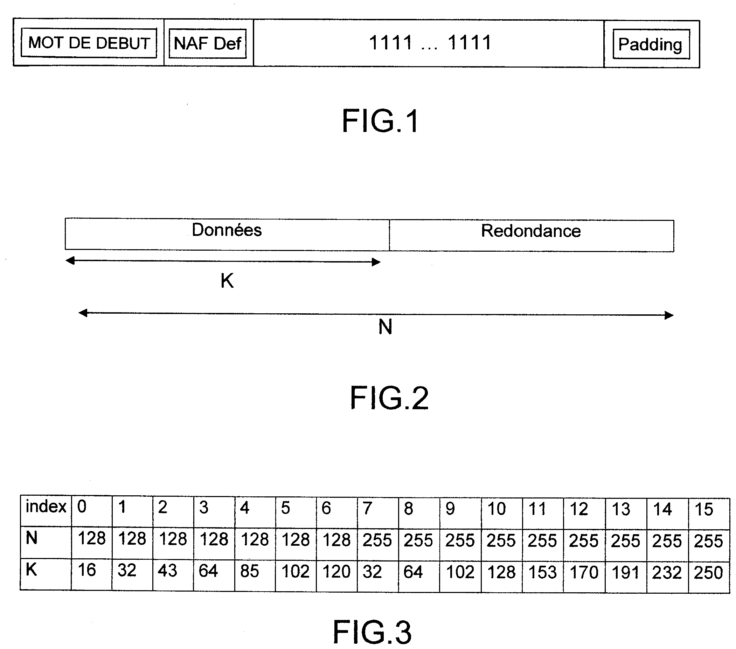

- La figure 1, le format d'une NAL de type 12 utilisé par le procédé selon l'invention pour augmenter la redondance par ajout de NAL « vide »,

- La figure 2, la répartition données utiles/redondance dans le cas d'un code Reed-Solomon (RS),

- La figure 3, un exemple de la table d'index pour le code RS,

- La figure 4, un exemple d'insertion de protection par un code RS,

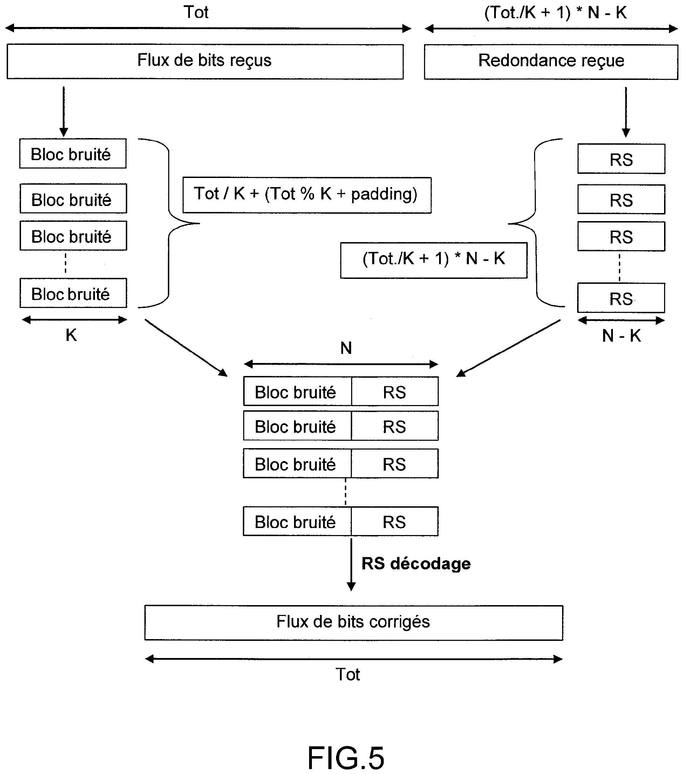

- La figure 5, un exemple de décodage avec utilisation de la protection par code RS,

- Les figures 6 à 9 des courbes de résultat obtenues avec la protection par code RS,

- La figure 10 un exemple de protection 1 NAL vidéo/ 1 NAL de redondance, et

- Les figures 11A, 11B et 11C deux exemples d'application dans le cas de la combinaison N NAL vidéo M NAL de redondance.

L'invention s'intéresse notamment à la protection des données compressées par le standard H.264/AVC contre les erreurs.

Il s'agit notamment d'utiliser la structure en couches d'abstraction réseau ou NAL (en anglo-saxon Network Abstraction Layer) du standard H.264/AVC pour insérer de la redondance afin de protéger le flux contre les erreurs résiduelles, tout en conservant une compatibilité avec le standard vidéo.

L'invention s'applique aussi pour les standards multimédia ou les procédés qui présentent notamment comme caractéristique de pouvoir discriminer les bits tout en respectant les conditions de contextes de codage ou de rendu final (e.g. d'impact visuel).

L'invention peut s'appliquer à tous les standards qui présentent au moins une structure d'encapsulation des données utiles, structure d'encapsulation qui peut être réutilisée comme base pour créer de nouvelles structures transportant des informations de synchronisation, de redondance, permettant de rendre le flux plus robuste aux erreurs.

En résumé, l'invention se présente, par exemple, sous les deux formes suivantes :

1. l'utilisation de NAL sans informations particulières ou « vides » comme typiquement les NAL type 12 initialement prévues pour du remplissage ou « padding »,

2. l'ajout de NAL supplémentaires portant de la redondance (introduction d'un nouveau type de NAL comprenant l'information du codeur employé et embarquant comme charge utile la redondance générée du côté transmetteur).

Cet ajout de redondance (quel que soit le type considéré) peut-être fait, soit directement lors de l'opération de codage de compression initiale, soit rajouté lors du passage dans un transcodeur. En effet, le transcodeur, capable d'interpréter la structure du flux binaire, est un outil permettant également de la modifier afin de changer éventuellement le format, le débit, la résolution du flux. Un tel outil peut donc également être utiliser dans le cadre de l'invention pour ajouter de la redondance, ou d'en retirer. Cet ajout de redondance peut être de plusieurs types :

a) redondance NAL par NAL, afin de lutter contre les pertes ou effacements de bits. Une NAL d'information est alors protégée par une NAL de redondance,

b) redondance transverse aux NAL, afin de lutter contre les pertes de paquet.

**Syntaxe des NAL**

Le flux binaire H.264/AVC est divisé en plusieurs couches d'abstractions réseau, ou NAL, qui sont séparées par un code de début avec un format 0x00 ... 0x00 0x01 (trois octets au minimum). Les deux premières NALs dans un flux contiennent l'information générale sur la vidéo à décoder, la première est la SPS pour les paramètres de la séquence (en abrégé anglo-saxon Sequence Parameter Set) et la seconde NAL est la PPS qui concerne les paramètres de l'image ou en anglo-saxon « Picture Parameter Set ».

La SPS NAL contient l'information nécessaire pour décoder le reste de la séquence : trame ou champ macroblocs, taille de la mémoire tampon des images de référence, type d'ordonnancement des images (picture order count type), IDC niveau et profil.

La NAL PPS contient le reste des valeurs nécessaires pour le décodage : type de compression (codage arithmétique ou à longueur variable (en anglo-saxon arithmetic or variable length coding)), nombre possible d'images de référence (en anglo-saxon number of possible reference pictures), champ d'information de pondération de prédiction (en anglo-saxon weighted prediction flag), décalage initial et chroma des paramètres de quantification (en anglo-saxon initial and chroma offset quantification parameters). Pendant le codage, plusieurs types de jeux de paramètres peuvent être utilisés (le changement se faisant toujours au début d'un groupe d'images ou GOP), ce qui signifie que chaque nouveau jeu de paramètres doit être identifié. Par simplicité, et sans perte de généralisation, les exemples donnés ci-après considèreront le cas où seules une couche SPS et une couche PPS ont été générées en début de séquence.

Après avoir décodé ces deux premières NALs, le décodeur reçoit la donnée vidéo réelle, correspondant à des portions d'images ou « slices ». Cette donnée est contenue dans une NAL de type 5 (IDR), ou 1 (données vidéos non partitionnées et non IDR), ou dans des NALs de type 2, 3 et/ou 4 pour les données vidéo partitionnées, comprenant un en-tête slice et la donnée slice qui contient les macroblocs codés dans la slice (par abus de langage traditionnel dans le cas où l'on est en mode partition de données pour lequel la slice correspond à l'ensemble des NALs de type 2, 3 et/ou 4).

L'en-tête contient l'information permettant d'interpréter la donnée. L'information donne : le numéro du premier macrobloc, le type de la slice à décoder (I, P, SI/SP, ou B), le jeu de paramètres image à utiliser, le numéro de la trame courante, le type de la trame courante (e.g. est-ce une trame IDR) et le POC. Suivent alors des données dépendant du type de la slice.

Ainsi, un en-tête de slice I contient notamment des informations sur l'emploi possible de la trame en question comme référence à longue vie (long term reference). De même, un en-tête de slice P contient notamment des informations de référence : le numéro des images de référence et les drapeaux (flag en anglo-saxon) indiquant ou non la nécessité à réordonner la liste des images de référence (en anglo-saxon reference picture list), l'utilisation d'une mémoire tampon de référence adaptatif, ayant pour fonction de passer une image de référence à courte vie à référence à longue vie. Enfin, un des éléments syntaxiques important de l'en-tête de slice (I comme P) est le paramètre de quantification additionnel (Slice_QP_Delta) valable pour toute la slice.

### Ajout de slices: cas des NALs "vides"

L'idée de la présente invention est notamment d'utiliser une ou plusieurs NALs redondantes (au sens où elles ne véhiculent pas d'information utile supplémentaire) afin d'augmenter la longueur du message sur laquelle on applique des techniques de corrélation.

Ceci peut être réalisé, par exemple, en employant des NALs de type 12, définies dans le standard H.264 comme des NAL de bourrage, dont la partie « utile » est remplie de 1. Alors, la NAL étant parfaitement connue (son en-tête est standard, la partie donnée est remplie de 1), elle peut être placée devant toute NAL de donnée vidéo et l'ensemble NAL 12 et mot de début (start code) de la NAL de donnée être ainsi vu comme un super mot de début (ou « super start-code») sur lequel peut s'effectuer la corrélation. Réalisant une corrélation non plus sur trois ou quatre octets (taille d'un start code normal) mais sur une dizaine, les risques de fausse alarme en cas de présence de bruit sont grandement réduits et on peut donc améliorer la détection de début de NAL de données vidéo perturbées par des erreurs binaires.

Ceci peut être généralisé à l'emploi d'autres types de NAL choisies parmi les valeurs réservées. En pratique, sauf à souhaiter véhiculer d'autres informations au moyen de cette NAL supplémentaire (par exemple des informations de redondance), il est préférable d'utiliser une NAL prédéfinie (donc connue du codeur et du décodeur), ce qui prévient le risque de mauvais fonctionnement d'un codeur peu robuste (« crash » suite à la rencontre d'une valeur de NAL non définie par exemple).

La taille de la NAL elle-même est libre d'être fixée et peut être adaptée aux conditions de transmission (adaptation aux capacités de corrélation que l'on souhaite obtenir en égard aux pertes d'efficacité introduites). Elle peut être fixée par défaut ou peut être utilisée pour porter une information supplémentaire, par exemple, en établissant un lien entre la longueur du NAL et le type du prochain NAL.

### FEC : exemple de codage correcteur au moyen de codes de Reed-Solomon

Le codage correcteur d'erreur est une technique utilisée dans de nombreuses applications, par exemple, les applications de stockage (e.g. CD-Rom) ou, bien entendu, le domaine des transmissions sans fil qui s'effectuent sur un canal de transmission propice aux erreurs. Son principe est d'ajouter de la redondance aux données, ce qui permettra à un décodeur de vérifier si la donnée a été corrompue, s'il y a eu des bits perdus ou encore si la valeur des bits a été modifiée (inversée de 0 à 1 ou vice-versa). L'idée est de réduire l'impact des bits erronés et des erreurs paquets sur le décodage.

Egalement appelée Forward Error Correction (FEC), l'introduction de codage correcteur d'erreur peut être implémentée à plusieurs niveaux. Généralement, elle est implémentée au niveau du canal de transmission ou du réseau, mais elle peut aussi être incluse au niveau applicatif (typiquement au niveau de l'opération de codage de source). Ceci est particulièrement intéressant lorsque l'on souhaite appliquer la correction d'erreur FEC en lien direct avec les données à protéger.

Un exemple de code FEC bien connu est le code Reed Solomon, utilisé dans les communications numériques (communications sans fil et satellite, DVB Digital video broadcasting, ADSL) et mémorisation (CD, DVD, code bar). Ces codes sont des sous-ensembles de codes BCH et sont des codes blocs linéaires. Un code Reed-Solomon est spécifié comme code RS$(n,k)$ avec $m$-bit symboles.

Cela signifie que le codeur prend $k$ symboles de données de $m$ bits chacun et qu'il ajoute des symboles de parité pour faire un mot de code de n symboles. Il y a (n-k) symboles de parité de m bits chacun. Un décodeur de Reed-Solomon peut corriger jusqu'à t symboles (t entier) qui contiennent des erreurs dans un mot de code où $2t = n-k.$

**Ajout de slices: cas des NALs "remplies"**

Comme il a été énoncé précédemment, la donnée video appelée également couche de codage video (VCL) est encapsulée par un en-tête de NAL pour générer une couche d'abstraction réseau ou NAL. Cet en-tête est habituellement composé d'un unique octet qui contient :

• Un bit interdit qui doit être égal à zéro,

• Deux bits qui donnent une information sur le VCL contenu dans la NAL. S'il est égal à zéro alors la slice ne sera pas utilisée comme référence,

• 5 bits sur lesquels sont codés le type NAL, qui donne de l'information sur le type de slice qu'il contient : IDR, partition de données ou Data partition, paramètre de séquence ou sequence parameter, jeu de paramètres image (set ou picture parameter set).

De façon à rester compatible avec le standard et à véhiculer de l'information redondante, un nouveau type de NAL peut être créé, que nous numéroterons par la suite sans perte de généralité comme étant de type 24, valeur parmi les valeurs réservées définies par le standard.

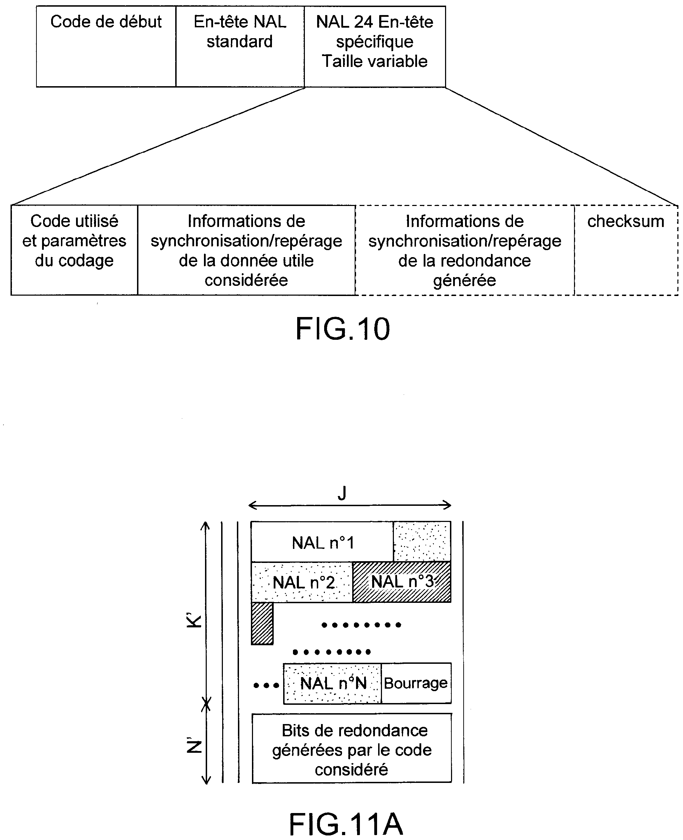

Pour indiquer le code correcteur d'erreur qui a été utilisé ainsi que la trame vidéo originale à laquelle cette redondance se rapporte, on ajoute ensuite un ou plusieurs octets immédiatement après cet en-tête de NAL générique, créant ainsi un en-tête de NAL spécifique du format NAL de redondance selon l'invention, comme illustré en Figure 10. En prenant l'exemple où la NAL de redondance protège une unique trame originale en mode mono-slice (une slice par trame), un octet peut être suffisant pour coder l'en-tête de NAL spécifique : cet octet permet en effet de coder l'index d'une table RS indiquant la taille du code utilisé, le numéro de la trame (en recopiant le champ frame_num ou POC sur quatre bits) de données utiles à laquelle cette NAL de redondance se rapporte. Ainsi, en codant l'index sur quatre bits, on a le choix de 16 différents codes RS, en supposant la table connue à l'émission comme à la réception.

Les tailles et formats sont choisis en fonction des applications. Le pouvoir de correction est donné par exemple par le débit K/N qui correspond à la quantité de données d'origine, K, comparée à la quantité de redondance, N.

L'avantage d'une telle solution est d'offrir la possibilité d'appliquer une protection d'erreur inégale ou Unequal Error Protection (UEP) en modifiant simplement le rendement du code correcteur d'erreur selon le type de la NAL à protéger.

Exemple d'utilisation : cas où une NAL de redondance protège une unique NAL de données initiales

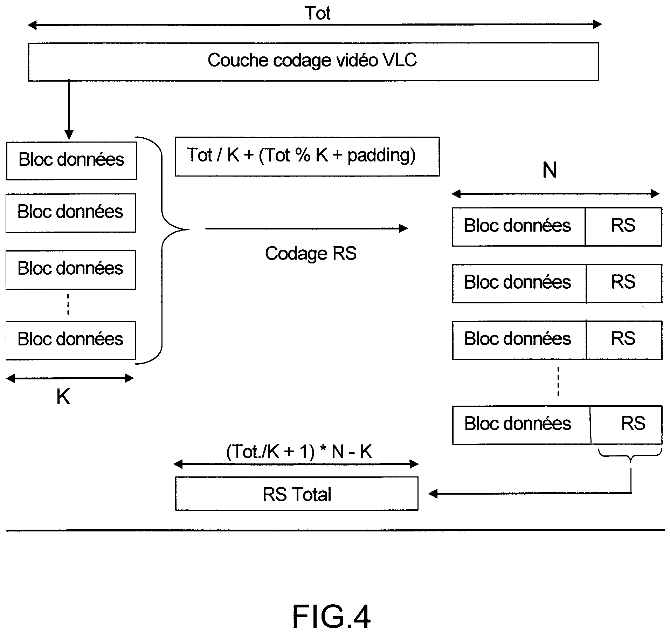

Le codeur RS peut ensuite débuter en découpant le flux de bits en plusieurs blocs de K bytes. Si la longueur L du flux de bits n'est pas un multiple de K, le dernier bloc est bourré avec des zéros. Chacun de ces blocs est ensuite envoyé vers le codeur RS qui génère les blocs d'origine et les N-K bytes de redondance. Ces bytes sont mémorisés pour chaque bloc codé, et leur flux de longueur $(N-K).(\frac{L}{K}+1)$ obtenu est encapsulé à l'intérieur de la NAL RS, comme illustré dans la figure 4 donnant un exemple d'insertion de protection par un code RS.

Du côté décodeur, un décodeur standard ne considèrera pas les trames supplémentaires, donc il ne sera pas perturbé par leur présence.

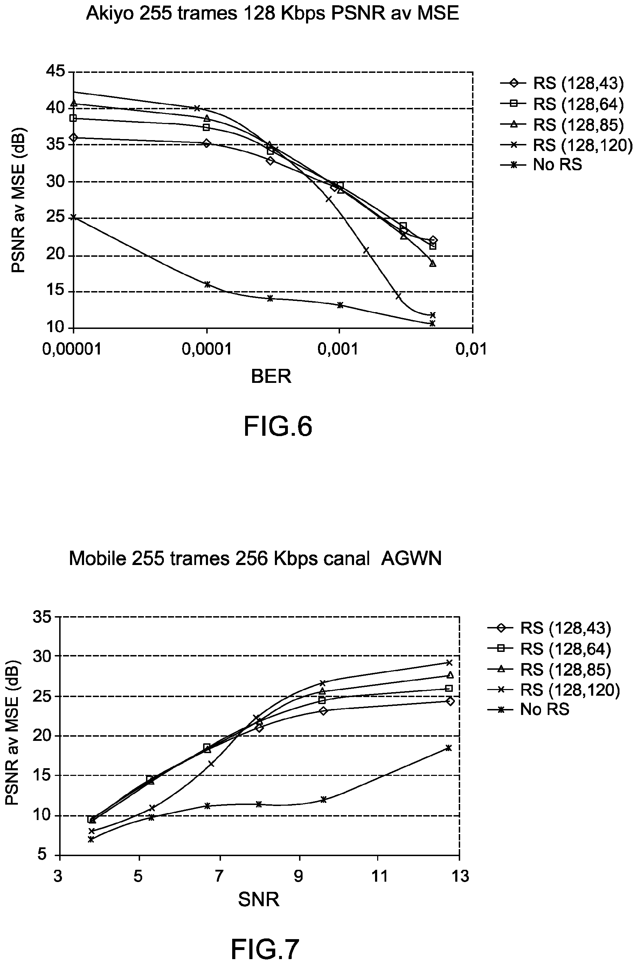

En revanche, le décodeur ayant connaissance de l'invention et donc averti de la présence potentielle des NALs supplémentaires, pourra tirer avantage du codage correcteur. En effet, à réception d'une NAL, il contrôlera le type de cette NAL et vérifiera qu'elle correspond à une donnée vidéo (i.e. NAL 5 : IDR, NAL 1 : I, P, ...). Si c'est le cas, la NAL suivante est alors extraite (récupérée) du flux binaire et son type ainsi que son en-tête spécifique seront contrôlés pour s'assurer qu'elle contient l'information relative à la NAL de données vidéo considérées. Dans le cas d'une transmission sans fil, le canal n'introduit pas de retard, donc les deux NALs arriveront dans leur ordre d'émission. Dans le cas d'une transmission où un délai peut être introduit (passage par un réseau de transmission par paquet par exemple), un processus de mise en mémoire tampon permet d'obtenir le ré-ordonnancement nécessaire. Les deux NALs peuvent donc être traitées simultanément et séparées en blocs de la taille correcte de façon à recréer les symboles d'origine RS : la redondance est ainsi découpée en blocs qui sont concaténés aux blocs de taille K du flux de données. Les blocs de taille N obtenus sont ensuite décodés par le décodeur de Reed Salomon, qui fournit en sortie des mots décodés corrigés, de taille K. Ces mots peuvent alors être ré-assemblés pour générer la NAL de données vidéo corrigée, ce flux binaire reconstruit pouvant alors finalement être traité par le programme de décodage standard, comme il est illustré à la figure 6.

Exemples de résultats obtenus :

Plusieurs simulations ont été effectuées, en utilisant des codes de Reed-Solomon RS(128,43), RS(128,64), RS(128,85) and RS(128,120). Trois séquences vidéos de référence (séquences ITU-T 'Foreman', 'Mobile Calendar' et 'Akiyo') avec 255 trames pour chaque séquence. 'Akiyo' est une vidéo dite de type "tête et épaules" avec très peu de mouvement entre les trames, alors que 'Mobile Calendar' comprend beaucoup plus de mouvements ainsi que l'apparition d'objets. La séquence 'Foreman' est un compromis entre les deux. La taille choisie pour le GOP est de 15 trames et un maximum de 5 trames peuvent être utilisées comme référence. Les vidéos ont été codées pour obtenir des débits fixés pour le canal de transmission : 'Foreman' et 'Akiyo' à 128kb/s et 'Mobile Calendar' à 256 kb/s. Ainsi, lorsque le niveau moyen de la redondance varie, le débit source considéré varie lui aussi : si le rendement de codage augmente, celui de compression diminue et inversement, ce qui explique qu'à haut rapport signal à bruit, en absence d'erreur, les valeurs de PSNR ne sont pas identiques. Enfin, les résultats donnés sont fournis pour trois différents types de canal : canal binaire symétrique (BSC), canal à bruit additif blanc Gaussien (AWGN) et canal de Gilbert-Elliot (représentatif d'une transmission par trame sur canal sans fil). On observe que les performances, hors codage protecteur d'erreur sont, sauf éventuellement sur canal quasi parfait, bien inférieures à celles obtenues avec l'ajout de NAL de redondance. Dans les cas considérés, on peut ainsi recommander d'employer, soit un rendement de codage FEC très élevé (e.g. RS(128,120)) pour les canaux peu bruités, puis un rendement de codage FEC moyen (e.g. RS(128,85)) pour les canaux un peu plus bruités (BER>$10^{-3}$).

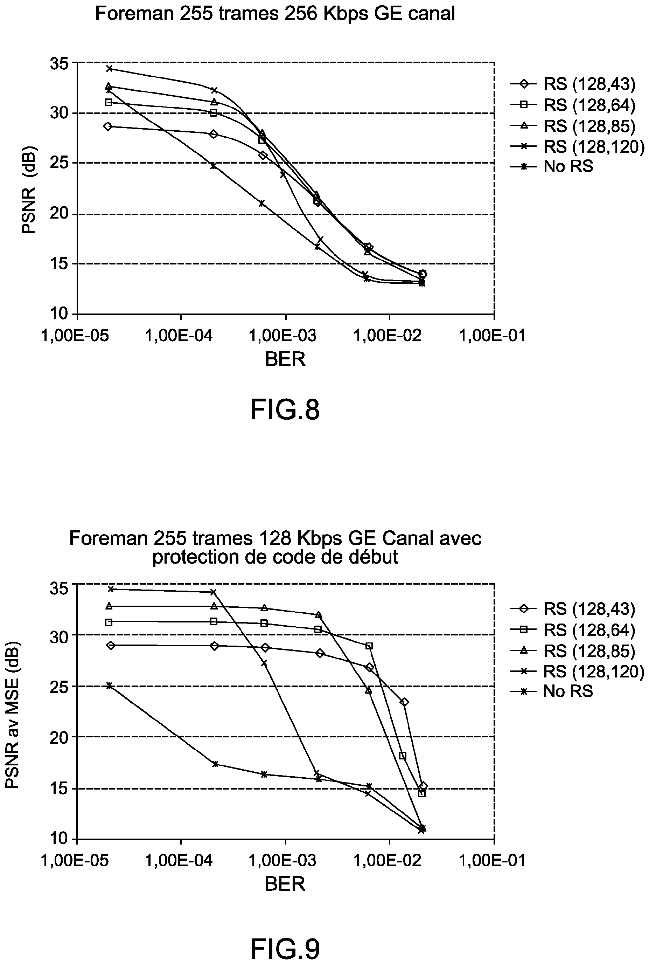

Finalement, on montre, en figure 9, le résultat obtenu en combinant l'emploi de protection de start code (ici simulé comme parfait) et de codage correcteur d'erreur : la comparaison des résultats obtenus avec ceux de la figure 8 montre l'intérêt de la protection des start codes.

**Modes de protection possibles selon l'invention** :

Les exemples présentés ci-avant ont été détaillés dans le cas où une NAL de données vidéo est directement protégée par une NAL de redondance, ladite redondance étant générée par des codes de Reed-Solomon. Sans sortir du cadre de l'invention, le procédé s'applique à l'emploi d'autres codes FEC. De plus, il est également généralisable à d'autres schémas de protection, qui peuvent permettrent de lutter contre différents types d'erreur, d'optimiser la quantité de redondance introduite ou de s'adapter aux contraintes de transmission.

• 1 NAL d'info - 1 NAL de redondance (cas précédemment détaillé)

Selon un autre mode de réalisation, on peut aussi utiliser le schéma suivant :

• 1 NAL d'info - M NAL de redondance

Ce cas peut être notamment considéré pour des raisons de taille, lorsque le rendement du code FEC est inférieur à ½, donc que la NAL de redondance dépasse la taille de la NAL de données, taille qui peut avoir été fixée en fonction des contraintes existant sur le réseau de transmission (e.g. taille MTU (Maximum Transfer Unit) maximale pour les transmissions sur réseau IP). Dans ce cas, le modèle précédemment exposé se généralise aisément en définissant dans l'en-tête supplémentaire de la NAL de redondance un champ indiquant en sus du numéro de NAL de vidéo à laquelle la redondance s'applique le numéro d'ordre de ladite redondance.

• N NAL d'info - 1 NAL de redondance

Ce cas peut être notamment considéré lorsque l'on emploie une redondance de rendement très élevé et donc que les NAL de redondance auront une taille très faible, éventuellement peu adaptée à la transmission qui suit (par exemple à une mise en paquet RTP qui pourrait générer un fort taux de bourrage). Dans ce cas, le modèle précédemment exposé se généralise aisément en définissant dans l'en-tête supplémentaire de la NAL de redondance un champ indiquant, non plus le numéro de la trame considérée, mais les différents numéros ainsi qu'une éventuelle information de taille ou de position pour chacune des redondances concaténées.

• N NAL d'info - M NAL de redondance

Ce cas, proche d'un schéma de codage par blocs, a pour intérêt de permettre une lutte contre des erreurs paquets si l'on prend soin de générer la redondance, non plus NAL par NAL, mais de façon transverse. Dans ce cas, le modèle précédemment exposé peut se généraliser en générant la redondance, en rangeant les NAL de données en ligne dans une matrice qui sera lue en colonne à l'entrée du codeur FEC et ensuite en définissant dans l'en-tête de NAL supplémentaire de chaque NAL de redondance les informations nécessaires à l'opération inverse de décodage : taille de la matrice, numéro d'ordre de NAL de redondance, position (ou tailles) respective des NAL de données vidéo dans la matrice. Eventuellement, on peut également proposer que pour simplifier la transmission et réduire la taille des en-têtes des NAL de redondance, les informations de description de la matrice de redondance (code FEC utilisé, taille de la matrice, nombre et position ou taille des NAL de données dans la matrice) soient transmises dans une NAL de redondance particulière (éventuellement protégée par un CRC et/ou répétée en vue de lutter contre sa perte) et que les données de redondance en tant que telle soient transmises dans les NAL de redondances du type classique mentionné ci-avant avec l'information supplémentaire de numéro d'ordre.

La figure 10 représente l'en-tête spécifique de NAL selon l'invention. Sa taille est donc variable, car elle fluctue fortement selon qu'il considère le cas où l'on a 1 NAL vidéo/ 1 NAL redondance ou celui où l'on protège N NALs d'information par M NALs de redondance. Dans tous les cas, l'en-tête spécifique de la NAL 24 en-tête est disposée après l'en-tête de NAL standard (1 octet) par exemple située elle-même après le « start code » qui peut être sur 3 ou 4 octets.

La NAL 24 est composée d'une partie I contenant le code utilisé et les paramètres de codage, d'une partie II contenant des informations de synchronisation/repérage de la donnée utile considérée, des informations de synchronisation/repérage de la redondance générée (partie III) et d'une partie IV ou checksum, ces deux dernières parties étant optionnelles.

Dans le cas particulier où l'on a 1 NAL vidéo/ 1 NAL redondance, il est possible de déduire du code utilisé, toute information nécessaire à la synchronisation de la redondance générée. Le schéma de principe peut alors être décliné (comme énoncé ci-avant, un octet peut suffire) comme suit :

| Index du code correcteur utilisé 4 bits | Numéro de la trame de données vidéo (frame_num) 4 bits par exemple |
| --- | --- |

En pratique, on peut également choisir de placer la NAL de redondance directement après la NAL de données et ainsi s'éviter de fournir le numéro de trame (information qui peut de toute façon être bruitée ou insuffisante en cas de codage « multi-slice ») et ainsi augmenter le nombre de possibilités de codes (256 valeurs d'index si on prend les 8 bits par exemple). Bien entendu, dans ce type de cas simplifié, le codeur et le décodeur devront s'être préalablement accordés sur la signification des différents bits de l'en-tête spécifique.

Dans le cas où l'on souhaite conserver la possibilité de proposer avec cette même NAL type 24 plusieurs modes de protection, on introduit un champ de signalisation précisant la syntaxe à suivre. De cette façon, le décodeur sait ce qu'il doit attendre et comment traiter les données. Dans le cas considéré ci-après où le sous-type est sur 2 bits, le cas N=1/M=1 peut être donné comme sous-type '11'. Suit alors le champ indiquant le code utilisé (champ I, par exemple 6 bits), et éventuellement un champ de numéro de trame permettant de repérer la NAL de données peut être présent (champ II).

| NAL red Sous-type Ex : 2 bits | Index du code correcteur utilisé Ex : 6 bits | Numéro (frame_num) de la trame de données vidéo Ex : 4 bits |
| --- | --- | --- |

Enfin, on peut aussi ajouter un CRC (champ IV facultatif) permettant de valider l'en-tête étendu de la NAL de redondance afin de s'assurer des valeurs utilisées pour effectuer l'opération de décodage correcteur d'erreur. Ceci conduit au schéma suivant :

| NAL Red Sous-type Ex : 2 bits | Index du code correcteur utilisé Ex : 6 bits | Numéro (frame_num) de la trame de données vidéo 4 bits | CRC 4 bits |
| --- | --- | --- | --- |

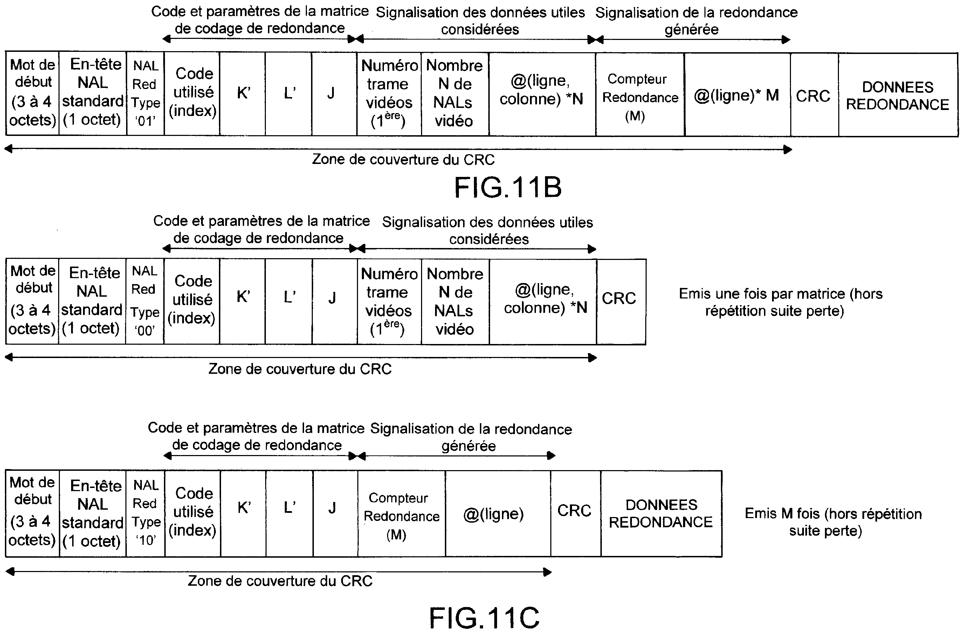

Les figures 11A, 11B et 11C correspondent au cas N NAL video/ M NAL redondance.

Dans le cas plus général où l'on considère plusieurs (N>=1) slices de données vidéo pour générer une ou plusieurs (M>=) slides de données redondantes, on choisit dans un premier temps un mode de traitement des données utiles.

La figure 11A représente un mode de rangement matriciel de la donnée utile, par exemple, par ligne ce qui permet de relire, par exemple, par colonne les données et générer ainsi une redondance transverse répartie sur toutes les N slices.

Les bits de redondance ainsi générés au moyen d'un code de rendement K/N peuvent ensuite être regroupés en M NALs de redondance. Le choix du regroupement se fait par exemple par rapport à une taille cible moyenne de ces NALs de redondance. Pour permettre de répartir au mieux les effets des erreurs, on relira cette redondance ligne par ligne.

On voit donc la nécessité de signaler les informations de synchronisation/repérage suivantes :

- Positionnement des N NALs de données vidéo dans la partie haute de la matrice, soit une adresse ligne+colonne de début de NAL pour chacune,

- Positionnements des M NALs de redondance dans la matrice basse de la matrice (soit en pratique, si on se contraint à créer de telles NAL alignées en début de lignes, une adresse de ligne pour chaque NAL de redondance) avec bien entendu l'information de valeur de N (nombre de positions de NAL de données dans la matrice) et de M (compteur du nombre de redondance).

On peut également indiquer à titre informatif le numéro de trame (frame_num) de la première slice, afin de permettre, par exemple, de différencier des trames appartenant à deux matrices différentes.

Pour des raisons pratiques, selon la valeur de N, le rendement N/K et donc la taille de la matrice considérée, on peut souhaiter :

- Soit placer dans chacune des M NALs de redondance (dite de sous-type 01, par exemple) l'information complète de description de la matrice, ce qui permet de pouvoir très facilement traiter les pertes de paquets puisque la taille du paquet perdu et la position exacte des mots perdus sont alors parfaitement connus par simple différence des adresses des différentes NAL ;

- Soit répartir l'information de description de la matrice au plus juste en terme de bits utilisés, par exemple, en plaçant l'ensemble de la signalisation DATA dans une première NAL (dite de sous-type 00, par exemple) qui ne contiendra pas de mots de redondance et ensuite dans chaque NAL (dite de sous-type 10 par exemple) contenant la redondance fournir la signalisation de redondance elle-même et le rappel des paramètres de codage.

Le format obtenu est donné aux figures 11B et 11C.

Les étapes décrites précédemment s'appliquent notamment dans un système de transmission comprenant au moins un codeur pourvu d'un processeur adapté à exécuter les étapes pré-mentionnées et d'un décodeur équipé d'un processeur adapté à décoder le message.

**Revendications**

1. Procédé de protection de données dans un système de transmission où les données multimédia sont codées par un standard de type H.264, les données étant encapsulées dans des structures de couche d'abstraction réseau de type NAL, **caractérisé en ce qu'**il comporte au moins les étapes suivantes :
   ajouter à une structure d'information au moins une couche d'abstraction réseau supplémentaire, NAL, contenant des informations d'identification de la structure comme NAL de redondance, d'identification des structures de données initiales auxquelles la redondance se rapporte et le code correcteur d'erreur utilisé pour transmettre ces données, le contenu et la position de la NAL étant connus d'un décodeur du système de transmission, les NALs supplémentaires comportant l'information du codeur utilisé et transportant comme charge utile la redondance générée du côté émetteur du système de transmission par le codage correcteur d'erreur.

2. Procédé de protection de données selon la revendication 1, **caractérisé en ce que** la nouvelle structure d'encapsulation transporte les informations de synchronisation.

3. Procédé de protection de données selon la revendication 1, **caractérisé en ce que** la structure d'encapsulation est configurée pour transporter des informations de correction d'erreur et **en ce que** le procédé comporte une étape où l'on ajoute au moins une structure d'encapsulation contenant de la redondance et les informations nécessaires pour :

   • l'identification de la structure d'encapsulation en tant que structure de redondance,
   • l'identification de la structure d'encapsulation à laquelle la redondance se rapporte,
   • le code correcteur d'erreur utilisé pour transmettre les données.

**4.** Procédé selon la revendication 1, **caractérisé en ce que** l'ajout de la NAL de redondance est effectué lors de l'opération de codage de compression initiale.

**5.** Procédé selon la revendication 1, **caractérisé en ce que** l'ajout de la NAL de redondance est effectué lors du passage dans un transcodeur des données à transmettre.

**6.** Procédé selon la revendication 1, **caractérisé en ce que** une NAL de redondance est disposée avant une NAL d'information, de données vidéo, et **en ce que** l'en-tête de la NAL de redondance comprend un champ indiquant le code correcteur d'erreur utilisé.

**7.** Procédé selon la revendication 6, **caractérisé en ce que** l'on inclut dans l'en-tête de la NAL de redondance un champ indiquant le numéro de NAL de vidéo à laquelle la redondance s'applique.

**8.** Procédé selon la revendication 1, **caractérisé en ce que** l'on ajoute dans l'en-tête de la NAL de redondance un champ indiquant les différents numéros de NAL auxquelles s'applique la NAL de redondance.

**9.** Procédé selon l'une des revendications 1 à 8, **caractérisé en ce que** l'on utilise le code Reed Solomon comme code correcteur d'erreur.

**10.** Dispositif de protection de données dans un système de transmission où les données sont des données multimédia codées avec un standard de type H.264, les données étant encapsulées dans des structures de couche d'abstraction réseau de type NAL, **caractérisé en ce qu'**il comporte au moins un codeur comprenant un processeur adapté à exécuter les étapes du procédé selon l'une des revendications 1 à 9.

**Patentansprüche**

**1.** Verfahren zum Schützen von Daten in einem Übertragungssystem, in welchem die Multimediendaten anhand eines Standards vom Typ H.264 codiert sind, wobei die Daten in Netzwerk-Abstraktionsschicht-Strukturen vom Typ NAL verkapselt sind, **dadurch gekennzeichnet, dass** es mindestens folgende Schritte beinhaltet:
Hinzufügen zu einer Informationsstruktur von mindestens einer zusätzlichen Netzwerk-Abstraktionsschicht, NAL, welche Identifizierungsinformationen der Struktur wie Redundanz-NAL, Identifizierungsinformationen der anfänglichen Datenstrukturen, auf welche sich die Redundanz bezieht, und den zur Übertragung dieser Daten verwendeten Fehler-Korrekturcode beinhalten, wobei der Inhalt und die Position der NAL einem Decodierer des Übertragungssystems bekannt sind, wobei die zusätzlichen NALs die Information des verwendeten Codierers beinhalten und als Nutzlast die senderseitig durch das fehlerkorrigierende Codieren erzeugte Redundanz des Übertragungssystems transportiert.

**2.** Verfahren zum Schützen von Daten nach Anspruch 1, **dadurch gekennzeichnet, dass** die neue Verkapselungsstruktur die Synchronisierungsinformationen transportiert.

**3.** Verfahren zum Schützen von Daten nach Anspruch 1, **dadurch gekennzeichnet, dass** die Verkapselungsstruktur konfiguriert ist zum Transportieren der Fehlerkorrekturinformationen und dadurch, dass das Verfahren einen Schritt beinhaltet, bei welchem man mindestens eine Verkapselungsstruktur hinzufügt, welche die Redundanz sowie die zu folgenden Schritten notwendigen Informationen beinhaltet:

• die Identifizierung der Verkapselungsstruktur als Redundanzstruktur,
• die Identifizierung der Verkapselungsstruktur, auf welche sich die Redundanz bezieht,
• den zur Übertragung der Daten verwendeten Fehlerkorrekturcode.

**4.** Verfahren nach Anspruch 1, **dadurch gekennzeichnet, dass** die Hinzufügung der Redundanz-NAL bei dem Schritt des anfänglichen Kompressions-Codierens erfolgt.

**5.** Verfahren nach Anspruch 1, **dadurch gekennzeichnet, dass** die Hinzufügung der Redundanz-NAL beim Passieren der zu übertragenden Daten durch einen Transcodierer erfolgt.

**6.** Verfahren nach Anspruch 1, **dadurch gekennzeichnet, dass** eine Redundanz-NAL vor einer Informations-NAL, von Videodaten, angeordnet ist, und dadurch, dass der Header der Redundanz-NAL ein Feld beinhaltet, welches den verwendeten Fehlerkorrekturcode angibt.

**7.** Verfahren nach Anspruch 6, **dadurch gekennzeichnet, dass** man in den Header der Redundanz-NAL ein Feld einbezieht, welches die Nummer der Video-NAL angibt, auf welche die Redundanz angewendet wird.

**8.** Verfahren nach Anspruch 1, **dadurch gekennzeichnet, dass** man im Header der Redundanz-NAL ein Feld hinzufügt, welches die unterschiedlichen NAL-Nummem angibt, auf welche die Redundanz-NAL angewendet wird.

**9.** Verfahren nach einem der Ansprüche 1 bis 8, **dadurch gekennzeichnet, dass** man den Reed Solomon-Code als Fehlerkorrekturcode verwendet.

**10.** Vorrichtung zum Schützen von Daten in einem Übertragungssystem, in welchem die Daten Multimediendaten sind, welche anhand eines Standards vom Typ H.264 codiert sind, wobei die Daten in Netzwerk-Abstraktionsschicht-Strukturen vom Typ NAL verkapselt sind, **dadurch gekennzeichnet, dass** sie mindestens einen Codierer beinhaltet, welcher einen Prozessor beinhaltet, welcher geeignet ist, die Schritte des Verfahrens nach einem der Ansprüche 1 bis 9 auszuführen.

## Claims

**1.** Data protection method in a transmission system, in which multimedia data are encoded by a H.264 standard, the data being encapsulated in structures of the network abstraction layer of the NAL type, **characterized in that** comprises at least the following steps:

adding to an information structure at least one additional network abstraction layer, NAL, containing identification information of the structure as the redundancy NAL, identification of the initial data structures to which the redundancy relates, and the error-correcting code used to transmit the data, whose content and position of the NAL being known to a decoder of the transmission system, the additional NALs containing information of the decoder used and carrying as a payload the redundancy generated on the transmitter side of the transmission system by error-correcting encoding.

**2.** Data protection method as claimed in claim 1, **characterized in that** the new encapsulation structure transports synchronization information.

**3.** Data protection method as claimed in claim 1, **characterized in that** the encapsulation structure is configured to transport error correction information and **in that** the method comprises a step in which at least one encapsulation structure containing the redundancy and information necessary is added for:

- the identification of the encapsulation structure as a redundancy structure,
- the identification of the encapsulation structure to which the redundancy relates,
- the error-correcting code used to transmit the data.

**4.** The method as claimed in claim 1, **characterized in that** the redundancy NAL is added during the initial compression encoding operation.

**5.** The method as claimed in claim 1, **characterized in that** the redundancy NAL is added when the data to be transmitted pass a transcoder.

**6.** The method as claimed in claim 1, **characterized in that** a redundancy NAL is disposed before a NAL of information of video data and **in that** the header of the redundancy NAL comprises a field indicating the error-correcting code used.

**7.** The method as claimed in claim 6, **characterized in that** in the redundancy NAL header a field indicating the number of the video NAL to which the redundancy applies is included.

**8.** The method as claimed in claim 1, **characterized in that** a field indicating the different NAL numbers to which the NAL redundancy applies is added in the redundancy NAL header.

**9.** The method as claimed in one of claims 1 to 8, **characterized in that** the Reed-Solomon code is used as the error-correcting code.

10. Data protection device in a transmission system in which data are multimedia data encoded by a H.264 type standard, the data being encapsulated in structures of the network abstraction layer of the NAL type, **characterized in that** it comprises at least one encoder comprising a processor suitable for executing the steps of the method as claimed in one of claims 1 to 9.

| MOT DE DEBUT | NAF Def | 1111 … 1111 | Padding |
|---|---|---|---|

## FIG.1

| Données | Redondance |
|---|---|

K

N

## FIG.2

| index | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| N | 128 | 128 | 128 | 128 | 128 | 128 | 128 | 255 | 255 | 255 | 255 | 255 | 255 | 255 | 255 | 255 |
| K | 16 | 32 | 43 | 64 | 85 | 102 | 120 | 32 | 64 | 102 | 128 | 153 | 170 | 191 | 232 | 250 |

## FIG.3

EP 1 997 254 B1

Tot

Couche codage vidéo VLC

Bloc données

Bloc données

Bloc données

Bloc données

K

Tot / K + (Tot % K + padding)

Codage RS

N

Bloc données | RS

Bloc données | RS

Bloc données | RS

Bloc données | RS

(Tot./K + 1) * N - K

RS Total

FIG.4

FIG.5

Akiyo 255 trames 128 Kbps PSNR av MSE

FIG.6

Mobile 255 trames 256 Kbps canal AGWN

FIG.7

Foreman 255 trames 256 Kbps GE canal

FIG.8

Foreman 255 trames 128 Kbps GE Canal avec
protection de code de début

FIG.9

| Code de début | En-tête NAL standard | NAL 24 En-tête spécifique Taille variable |
|---|---|---|

| Code utilisé et paramètres du codage | Informations de synchronisation/repérage de la donnée utile considérée | Informations de synchronisation/repérage de la redondance générée | checksum |
|---|---|---|---|

## FIG.10

FIG.11A

**Code et paramètres de la matrice de codage de redondance** | **Signalisation des données utiles considérées** | **Signalisation de la redondance générée**

| Mot de début (3 à 4 octets) | En-tête NAL standard (1 octet) | NAL Red Type '01' | Code utilisé (index) | K' | L' | J | Numéro trame vidéos (1ère) | Nombre N de NALs vidéo | @(ligne, colonne) *N | Compteur Redondance (M) | @(ligne)* M | CRC | DONNEES REDONDANCE |
|---|---|---|---|---|---|---|---|---|---|---|---|---|---|

Zone de couverture du CRC

# FIG.11B

**Code et paramètres de la matrice de codage de redondance** | **Signalisation des données utiles considérées**

| Mot de début (3 à 4 octets) | En-tête NAL standard (1 octet) | NAL Red Type '00' | Code utilisé (index) | K' | L' | J | Numéro trame vidéos (1ère) | Nombre N de NALs vidéo | @(ligne, colonne) *N | CRC |
|---|---|---|---|---|---|---|---|---|---|---|

Zone de couverture du CRC

Emis une fois par matrice (hors répétition suite perte)

**Code et paramètres de la matrice de codage de redondance** | **Signalisation de la redondance générée**

| Mot de début (3 à 4 octets) | En-tête NAL standard (1 octet) | NAL Red Type '10' | Code utilisé (index) | K' | L' | J | Compteur Redondance (M) | @(ligne) | CRC | DONNEES REDONDANCE |
|---|---|---|---|---|---|---|---|---|---|---|

Zone de couverture du CRC

Emis M fois (hors répétition suite perte)

# FIG.11C

EP 1 997 254 B1

## RÉFÉRENCES CITÉES DANS LA DESCRIPTION

### Documents brevets cités dans la description

- WO 2005107123 A
- WO 9514971 A
- EP 1592160 A
- US 6819658 B